# EUROPÄISCHE PATENTSCHRIFT

(11) **EP 1 777 479 B1**
(45) Veröffentlichungstag und Bekanntmachung des Hinweises auf die Patenterteilung: **11.09.2019**
(21) Anmeldenummer: 06021116.6
(22) Anmeldetag: 09.10.2006
(51) Int. Cl.: F28F 3/12, B22F 3/105, F28F 7/02, F01P 3/00

(54) **METALLISCHER KÖRPER MIT EINER KANALANORDNUNG ZUR TEMPERIERUNG DER DURCH DEN METALLISCHEN KÖRPER GEBILDETEN SPRITZ-ODER GIESSFORM**
METALLIC BODY WITH CHANNEL ARRANGEMENT FOR REGULATING THE TEMPERATURE OF INJECTION OR CASTING DIE FORMED BY SAID METALLIC BODY
CORPS MÉTALLIQUE AVEC AGENCEMENT DE CANAUX POUR RÉGLER LA TEMPÉRATURE D'UN MOULE D'INJECTION OU DE COULAGE FORMÉ PAR LEDIT CORPS MÉTALLIQUE

(30) Priorität: 18.10.2005 DE 102005050118
(43) Veröffentlichungstag der Anmeldung: 25.04.2007
(73) Patentinhaber: Werkzeugbau Siegfried Hofmann GmbH, 96215 Lichtenfels (DE)
(72) Erfinder: Georg Mai, 96215 Lichtenfels (DE)
(74) Vertreter: Hafner & Kohl

(56) Entgegenhaltungen:
- EP-A2- 1 091 091
- EP-A2- 1 375 824
- WO-A1-02/055862
- WO-A2-01/85386
- DE-A1- 10 236 523
- DE-A1- 19 600 164
- DE-A1- 19 740 502
- DE-C1- 19 704 700
- FR-A1- 2 845 492
- GB-A- 1 257 041
- US-A- 6 112 804
- US-A1- 2004 103 709
- US-B1- 6 301 109
- US-B1- 6 391 251

## Beschreibung

Die Erfindung/Neuerung betrifft einen metallischen Körper mit einer Kanalanordnung zur Temperierung der durch den metallischen Körper gebildeten Spritz- oder Gießform bei welchem in einem Temperierabschnitt des Körpers mindestens ein von einem Fluid durchströmter Kanal angeordnet ist.

In vielen Bereichen der Technik ist es erforderlich oder zumindest zweckdienlich, Gegenstände wie z.B. Spritzformen oder Motorteile, mithin Teile, die aus metallischen Körpern gebildet werden, entweder zu heizen oder zu kühlen. Dazu sind in die Gegenstände Kühl- oder Heizkanäle eingebracht, die von einem Kühl- oder Heizfluid durchströmt werden.

Insbesondere bei Spritzformen sind Kühlkanäle üblich, um thermisch besonders belastete Bereiche der Spritzform unterhalb einer kritischen Temperatur zu halten. Dies wirkt sich auf den Spritzprozeß und insbesondere auf die zu verspritzenden Materialien positiv aus.

Es ist aus DE 197 04 700 C1 bekannt geworden, Spritzformen durch Rapid Prototyping im Rahmen eines sogenannten generativen selektiven Laserschmelzprozesses herzustellen. Dabei besteht grundsätzlich die Möglichkeit, die Kühlkanäle beim Bauprozeß in der Spritzform zu generieren.

Aus DE 10 2004 016 132 A1 ist ein Vollformgießverfahren und Gasableitungs- und Kühlkörper zur Verwendung in dem Vollformgießverfahren bekannt.

Aus DE 197 40 502 ergibt sich ein Verfahren zur Herstellung von Bauteilen mit einem oberflächennahen Durchfluß- und Verteilungssystem für Flüssigkeiten und/oder Gas, z.B. einem Kühlkanalsystem.

Der Erfindung/Neuerung liegt die Aufgabe zugrunde, einen metallischen Körper mit einer Kanalanordnung zur Temperierung der durch den metallischen Körper gebildeten Spritz- oder Gießform mit den weiteren Merkmalen des Oberbegriffes des Anspruches 1 derart auszubilden, daß eine besonders effiziente und schnelle Temperierung des Körpers oder zumindest von Teilen des Körpers erzielt werden kann.

Aus WO 01/85386 ist ein metallischer Körper mit einer Kanalanordnung zur Temperierung der durch den metallischen Körper gebildeten Spritz- oder Gießform gemäß dem Oberbegriff des Anspruchs 1 bekannt.

In einem Temperierabschnitt des metallischen Körpers ist mindestens ein von einem Fluid durchströmter Kanal angeordnet, wobei der Kanal zwischen einem Fluideinlaßbereich und einem Fluidauslaßbereich eine Mehrzahl von parallel geschalteten während eines generativen SLS-Bauprozesses des Körpers in diesem erzeugten Zweigkanälen reduzierten Querschnitts aufweist, die im hinter einer zu temperierenden Fassonfläche oder zu einer Kühl-/Heizfläche des Körpers verlaufen, wobei die Zweigkanäle von einem Eingangshauptkanal in einen Ausgangssammelkanal münden, und wobei die Querschnitte des Eingangshauptkanals und des Ausgangssammelkanals wesentlich größer sind als der Querschnitt der Zweigkanäle.

Erfindungsgemäß sind mehrere Zweigkanäle zwischen ihrer Aus-/Einmündung aus dem Eingangshauptkanal bzw. in den Ausgangssammelkanal mehrfach querverbunden und mehrere Zweigkanäle bilden ein flächiges Zweigkanalnetz, das sich äquidistant zur zu kühlenden Fassonfläche oder Kühl-/Heizfläche erstreckt, wobei der Flußwiderstand im Zweigkanalnetz quer zur Hauptstromrichtung kleiner ist als in Hauptstromrichtung und wobei bei einer gekrümmten oder gewölbten Fassonfläche die flächige Struktur der Zweigkanäle gekrümmt oder gewölbt parallel zu der entsprechend gekrümmten bzw. gewölbten Fassonfläche des Körpers verläuft.

Als Kerngedanke der Erfindung wird es angesehen, einen metallischen Körper, der eine Spritz-, Press- oder Gießform bildet mit einer besonders effizienten und flexiblen Kühlung zu versehen, wobei die zu kühlenden Flächen sehr schnell, d.h. trägheitsarm auf die Temperatur des Mediums reagieren, d.h. schnell heruntergekühlt oder schnell hochgeheizt werden können. Der SLS-Prozeß erlaubt es, feine parallel geschaltete Zweigkanäle unmittelbar unter der zu temperierenden Oberfläche anzuordnen und die Kanäle quasi der Struktur der Oberfläche folgen zu lassen. Dies ist durch Bohrverfahren grundsätzlich nicht oder nur mit erheblichem Aufwand möglich, so daß durch die erfindungsgemäße Anordnung eine stark verbesserte Kühlung oder Heizung von metallischen Körpern, die Spritz-, Press- oder Gießformen bilden, erreicht werden kann.

Die Zweigkanäle führen gemäß der Erfindung von einem Eingangshauptkanal des Körpers in einen Ausgangssammelkanal, wobei die Querschnitte des Eingangshauptkanals und des Ausgangssammelkanals wesentlich größer sind als der Querschnitt der Zweigkanäle. Dadurch wird eine besonders gleichmäßige Durchströmung der Zweigkanäle sichergestellt.

In vorteilhafter Weise ermöglicht es die Erfindung von einer einfachen Kühlkanalstruktur, wie sie bislang z.B. im Formenbau üblich war, zu einer Kühlflächenstruktur überzugehen.

Die einzelnen Zweigkanäle sind miteinander mehrfach verbunden, wodurch eine Netzstruktur ausgebildet wird, wobei in einem Abstand von nur 2 mm zur Formoberfläche eine Kühlfläche gebildet werden kann, die eine ausreichende Stabilität für die meisten Spritz- oder Preßprozesse aufweist und es ermöglicht, hohe Volumenströme einer Kühl- oder Heizflüssigkeit durch die Struktur fließen zu lassen. Derartige Netzstrukturen zeichnen sich dadurch aus, daß sei beim Umfließen von Auswerfern, Heißkanaldüsen und dergleichen keinen Strömungsschatten bilden. Die kurzen Abstände zur Formoberfläche ermöglichen einerseits eine extrem effiziente Kühlung, andererseits aber auch bei sehr hochwertigem Werkzeugstahl kurze Zykluszeiten. Unterschiedliche Formbereiche können unterschiedlich temperiert werden, wodurch z.B. ein temperaturabhängiger Verzug des Spritzteils ausgeschlossen werden kann. Das flächige Zweigkanalnetz kann äquidistant zu der kühlenden Fassonfläche oder Kühl-/Heizfläche des Körpers verlaufen, der Flußwiderstand im Zweigkanalnetz ist quer zur Hauptstromrichtung kleiner als in Hauptstromrichtung, so daß die vorstehend genannten Strömungsschattenbildungen vermieden werden.

Die flächige Struktur des Zweigkanalnetzes kann als ebene Fläche ausgebildet sein. Es kann aber auch tonnenartig oder kuppelartig gewölbt parallel zu einer entsprechend gekrümmten oder gewölbten Fassonfläche des Formkörpers verlaufen. Um eine möglichst gleichmäßige Flächenkühlung zu erzielen, ist es zweckdienlich, wenn die Dichte der hinter einer Heiz-/Kühl- oder Fassonfläche des Körpers angeordneten Zweigkanäle im Wesentlichen konstant gehalten ist, d.h. bei einer netzartigen Struktur die Maschen des Kühlnetzes weitgehend konstant sind.

In besonders vorteilhafter Ausführungsform wird die netzartige Kanalstruktur durch eine in einem Hohlraumbereich des Körpers angeordnete Säulenstruktur gebildet, wobei die Säulen der Säulenstruktur Abschnitte der Zweigkanäle voneinander trennt. Die Säulen der Säulenstruktur können einen runden oder ovalen Querschnitt aufweisen, es sind aber auch rechteckige, quadratische oder rautenartige Querschnitte mit Vorteil denkbar. Darüber hinaus ist es möglich, eine Mehrzahl von Zweigkanälen im Wesentlichen gerade parallel laufend nebeneinander anzuordnen, wobei der Abstand der Zweigkanäle voneinander kleiner oder gleich dem Durchmesser der Zweigkanäle gewählt werden kann. Eine gute Flächenkühlung wird auch dann erzielt, wenn mehrere Zweigkanäle wellenartig nebeneinander verlaufen und ineinander eingreifend flächig angeordnet sind. Das generative Verfahren erlaubt es mit Vorteil, innerhalb der Kanäle alle Übergänge zu verrunden, um einerseits Druckverluste innerhalb des Kanalsystems zu reduzieren und Ablagerungen weitgehend zu vermeiden.

Besonders vorteilhaft kann die gezielte, zumindest teilweise auch flächig ausgebildete Kühlung gemäß der Erfindung dann eingesetzt werden, wenn gleichsam hinter den Zweigkanälen eine Isolierschicht mit reduzierter Masse angeordnet wird, die generativ beim Bauprozeß des Körpers erzeugt wird. Eine Isolierschicht mit reduzierter Masse und damit reduzierter Wärmekapazität läßt sich durch einen SLS-Prozeß herstellen, beispielsweise dadurch, daß Metallpulver nicht vollständig aufgeschmolzen und dadurch die der Isolierschicht mit reduzierter Dichte verfestigt wird.

Weiterhin ist es besonders vorteilhaft, wenn in mindestens einem Zweigkanal oder in die netzartige Struktur der Zweigkanäle mindestens ein Spülkanal mündet. Ein solcher Spülkanal kann zum einen dazu verwendet werden, Ablagerungen, die sich beim Betrieb der Anordnung bilden können, mit hohem Druck auszuspülen. Darüber hinaus ist ein derartiger Spülkanal aber auch vorteilhaft, wenn es darum geht, Pulverrückstände nach dem generativen Bauprozeß aus der feinen Kanalstruktur auszutragen.

Wenn die Zweigkanäle eines Zweigkanalnetzes einen im Wesentlichen elliptischen Querschnitt aufweisen, mit anderen Worten die Säulen einer Säulenstruktur in ihrem Mittelbereich einen gegenüber den Endbereichen reduzierten Durchmesser aufweisen, dann können hohe auf die Enden der Säulenstruktur einwirkende Kräfte mit besonderem Vorteil aufgefangen werden, d.h. Kerbspannungen werden im Endbereich der Säulenstruktur vermieden.

Die Erfindung ist anhand vorteilhafter Ausführungsbeispiele in den Zeichnungsfiguren näher erläutert. Diese zeigen
- Fig. 1: eine erfindungsgemäße Kühlanordnung, die in Verbindung mit einem zu spritzenden Getriebegehäuse zur Kühlung einer Fläche eingesetzt werden kann;
- Fig. 2: drei unterschiedliche Darstellungen von Flächenkühlstrukturen, die durch Zweigkanalnetze gebildet werden.

Zunächst wird auf Zeichnungsfigur 1 Bezug genommen. Dort ist mit 1 ein Getriebegehäuse dargestellt, das durch nicht näher dargestellte Spritzformen in einem Spritzprozeß hergestellt werden kann. Zur Kühlung der Spritzformen, die aus metallischen Körpern gebildet werden, ist ein Temperierabschnitt der Spritzformen zu kühlen und dazu einen von einem Kühlfluid durchströmten Kanal 3 vorgesehen.

Der Kanal 3 weist eine Mehrzahl von zwischen einem Fluideinlaßbereich und einem Fluidauslaßbereich parallel geschaltete Zweigkanäle auf, die gegenüber dem Fluideinlaßbereich und dem Fluidauslaßbereich einen stark reduzierten Querschnitt haben und im Wesentlichen äquidistant zur zu temperierenden Fassonfläche 31 des Formkörpers verlaufen.

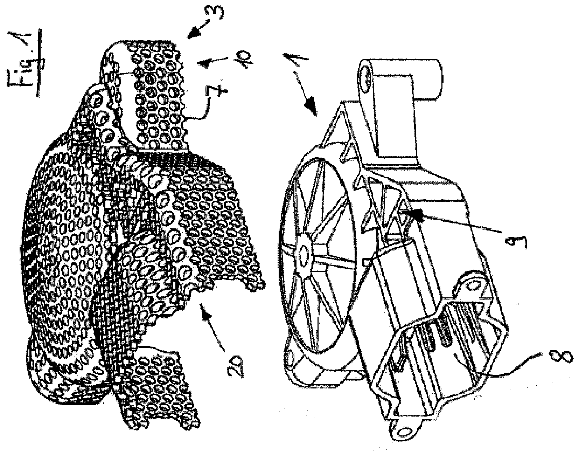

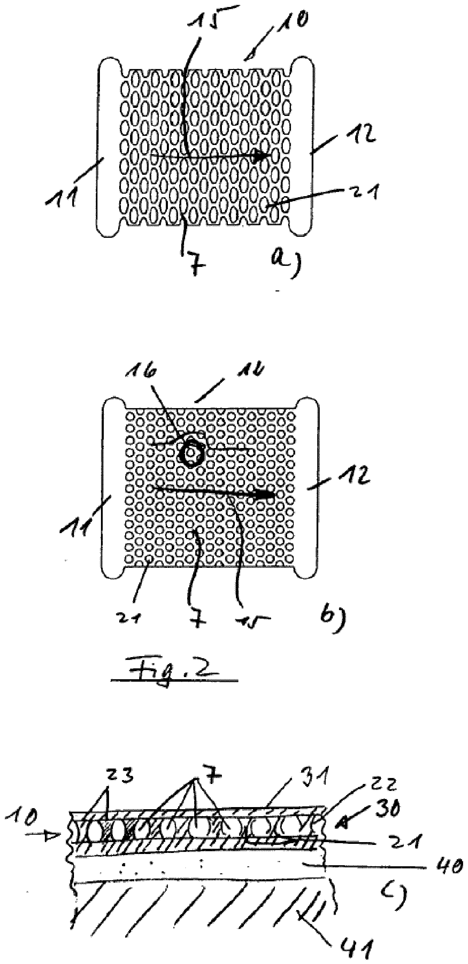

Figur 1 zeigt ein flächiges Zweigkanalnetz 10, das durch miteinander vielfach verbundene Zweigkanäle 7 gebildet wird. Auf das Zweigkanalnetz 10 wird im Rahmen der Figur 2 nochmals näher eingegangen.

Alle Zweigkanäle 7 münden von einem Eingangshauptkanal 11 zu einem Ausgangssammelkanal 12, wobei die Querschnitte des Eingangshauptkanals 11 und des Ausgangssammelkanals 12 wesentlich größer gewählt sind als der Querschnitt der davon abzweigenden Zweigkanäle 7.

Die Zweigkanäle 7 sind vielfach miteinander quer verbunden und bilden das flächige Zweigkanalnetz 10, das sich äquidistant zur kühlenden Fassonfläche der Spritzform erstreckt.

Figur 2 zeigt in den Figuren 2a, 2b zwei Beispiele unterschiedlicher Zweigkanalnetze 10.

Bei den Zweigkanalnetzen 10 gemäß Figuren 2a und 2b ist deutlich ersichtlich, daß der Flußwiderstand quer zur Hauptstromrichtung 15 kleiner ist als in Hauptstromrichtung, wodurch Kühlabschattungen vermieden werden, die beispielsweise bei Auswerferstiften oder sonstigen Strukturen in der Form auftreten könnten, wobei ein Auswerferstift in Figur 2b mit 16 angedeutet ist. Die Kühlflüssigkeit wird durch die Säulenstruktur, die in Hauptstromrichtung 15 einen größeren Flußwiderstand bewirkt, laufend abgelenkt, so daß sie um Hindernisse wie beispielsweise einen Auswerfer 16 gut herumfließt und auch im Bereich nach dem Auswerferstift 16 eine effiziente Kühlung sicherstellt.

Bei dem in Figur 2 dargestellten Ausführungsbeispiel flächiger Strukturen haben alle Zweigkanäle 7 den gleichen reduzierten Querschnitt. Falls aber das Zweigkanalnetz 10 eine kuppelartige Wölbung aufweist, so wie dies in Figur 1 dargestellt ist, können Abweichungen des Innenquerschnittes der Zweigkanäle beispielsweise in Eckbereichen 20 erforderlich sein.

Das Zweigkanalnetz 10 nach den Figuren 1 sowie 2a, und 2b wird durch eine in einem Hohlraumbereich des Körpers angeordnete Säulenstruktur 21 gebildet, wobei die Säulen der Säulenstruktur 21 einen runden oder ovalen Querschnitt aufweisen können (Figur 2a und 2b).

Innerhalb aller Kanäle, nämlich der Zweigkanäle 7 sowie der Eingangshauptkanäle 11 und Ausgangssammelkanäle 12 sind alle Übergänge verrundet, was in den Zeichnungsfiguren nicht näher dargestellt ist.

In Figur 2c ist ein Körper 30 im Schnitt dargestellt, wobei hinter einer Fassonfläche 31 ein Zweigkanalnetz 10 angeordnet ist, das durch Zweigkanäle 7 und eine dazwischen liegende Säulenstruktur 21 gebildet wird. Die Säulen der Säulenstruktur 21 haben in ihrem Mittelbereich 22 einen gegenüber den Endbereichen 23 reduzierten Durchmesser, wodurch sich für die Zweigkanäle 7, die zwischen den Säulen der Säulenstruktur 21 verlaufen, ein elliptischer Innenquerschnitt ergibt.

Bezogen auf die Fassonfläche 31 hinter den Zweigkanälen 7 ist in dem Körper 30 eine generativ beim Bauprozeß des Körpers 30 erzeugte Isolierschicht 40 mit reduzierter Masse bzw. reduzierter Dichte vorgesehen, wodurch die eigentliche Kühlschicht thermisch vom sonstigen Bereich 41 des Körpers 30 abgekoppelt wird. Dadurch kann die Fassonfläche 31 mit geringerer Trägheit abgekühlt bzw. aufgeheizt werden.

## Patentansprüche

1. Metallischer Körper mit einer Kanalanordnung zur Temperierung der durch den metallischen Körper gebildeten Spritz- oder Gießform, bei welcher in einem Temperierabschnitt des metallischen Körpers mindestens ein von einem Fluid durchströmter Kanal angeordnet ist, wobei der Kanal zwischen einem Fluideinlaßbereich und einem Fluidauslaßbereich eine Mehrzahl von parallel geschalteten während eines generativen SLS-Bauprozesses des Körpers in diesem erzeugten Zweigkanälen (7) reduzierten Querschnitts aufweist, die im hinter einer zu temperierenden Fassonfläche (31) oder zu einer Kühl-/Heizfläche des Körpers verlaufen, wobei die Zweigkanäle (7) von einem Eingangshauptkanal (11) in einen Ausgangssammelkanal (12) münden, und wobei die Querschnitte des Eingangshauptkanals (11) und des Ausgangssammelkanals (12) wesentlich größer sind als der Querschnitt der Zweigkanäle (7),
**dadurch gekennzeichnet, dass**
mehrere Zweigkanäle (7) zwischen ihrer Aus-/Einmündung aus dem Eingangshauptkanal (11) bzw. in den Ausgangssammelkanal (12) mehrfach querverbunden sind und mehrere Zweigkanäle (7) ein flächiges Zweigkanalnetz (10) bilden, das sich äquidistant zur zu kühlenden Fassonfläche (31) oder Kühl-/Heizfläche erstreckt, der Flußwiderstand im Zweigkanalnetz (10) quer zur Hauptstromrichtung (15) kleiner ist als in Hauptstromrichtung (15) und wobei bei einer gekrümmten oder gewölbten Fassonfläche die flächige Struktur der Zweigkanäle (7) gekrümmt oder gewölbt parallel zu der entsprechend gekrümmten bzw. gewölbten Fassonfläche (31) des Körpers verläuft.

2. Metallischer Körper nach Anspruch 1,
**dadurch gekennzeichnet, dass**
die Zweigkanäle (7) unmittelbar unter der zu temperierenden Oberfläche verlaufen.

3. Metallischer Körper nach einem der vorhergehenden Ansprüche,
**dadurch gekennzeichnet, dass**
alle Zweigkanäle (7) im Wesentlichen den gleichen reduzierten Querschnitt aufweisen.

4. Metallischer Körper nach einem der vorhergehenden Ansprüche,
**dadurch gekennzeichnet, dass**
die Dichte der hinter einer Heiz-/Kühl- oder Fassonfläche (31) des Körpers angeordneten Zweigkanäle (7) im Wesentlichen konstant ist.

5. Metallischer Körper nach einem der vorhergehenden Ansprüche,
**dadurch gekennzeichnet, dass** das Zweigkanalnetz (10) durch eine in einem Hohlraumbereich des Körpers angeordnete Säulenstruktur (21) gebildet ist, wobei die Säulenstruktur (21) Abschnitte der Zweigkanäle (7) voneinander trennt.

6. Metallischer Körper nach einem der vorhergehenden Ansprüche,
**dadurch gekennzeichnet, dass**
die Säulen der Säulenstruktur (21) einen runden oder ovalen Querschnitt aufweisen.

7. Metallischer Körper nach einem der vorhergehenden Ansprüche,
**dadurch gekennzeichnet, dass**
die Säulen der Säulenstruktur (21) einen rechteckigen, quadratischen oder rautenartigen Querschnitt aufweisen.

8. Metallischer Körper nach einem der vorhergehenden Ansprüche,
**dadurch gekennzeichnet, dass**
die Säulen der Säulenstruktur (21) eine Hexagonalstruktur der Zweigkanäle (7) bilden.

9. Metallischer Körper nach einem der vorhergehenden Ansprüche,
**dadurch gekennzeichnet, dass**
eine Mehrzahl von Zweigkanälen (6) im Wesentlichen gerade parallel laufend nebeneinander angeordnet sind, wobei der Abstand der Zweigkanäle (6) voneinander kleiner oder gleich ist als der Durchmesser der Zweigkanäle (6).

10. Metallischer Körper nach einem der vorhergehenden Ansprüche,
**dadurch gekennzeichnet, dass**
mehrere Zweigkanäle (6) wellenartig nebeneinander verlaufen und ineinander eingreifend flächig angeordnet sind.

11. Metallischer Körper nach einem der vorhergehenden Ansprüche,
**dadurch gekennzeichnet, dass**
innerhalb der Kanäle (7, 11, 12) alle Übergänge verrundet sind.

12. Metallischer Körper nach einem der vorhergehenden Ansprüche,
**dadurch gekennzeichnet, dass**
bezogen auf die zu kühlende/heizende Fläche (31) des Körpers (30) hinter den Zweigkanälen (7) eine generativ beim Bauprozeß des Körpers (30) erzeugte Isolierschicht (40) mit reduzierter Masse angeordnet ist.

13. Metallischer Körper nach einem der vorhergehenden Ansprüche,
**dadurch gekennzeichnet, dass**
mindestens ein Spülkanal in mindestens einem Zweigkanal oder in die netzartige Struktur der Zweigkanäle (7) mündet.

14. Metallischer Körper nach einem der vorhergehenden Ansprüche,
**dadurch gekennzeichnet, dass**
die Zweigkanäle (7) einen im Wesentlichen elliptischen Querschnitt aufweisen.

15. Metallischer Körper nach einem der vorhergehenden Ansprüche,
**dadurch gekennzeichnet, dass**
die Säulen der Säulenstruktur (21) in ihrem Mittelbereich (22) einen gegenüber den Endbereichen (23) reduzierten Durchmesser aufweisen.

## Claims

1. Metallic body comprising a channel arrangement for controlling the temperature of the injection mold or casting mold formed by the metallic body, in which at least one channel, which is flown-through by a fluid, is arranged in a temperature-controlled section of the metallic body, wherein the channel comprises, between a fluid inlet region and a fluid outlet region, a multitude of branch channels (7) of reduced cross-section, connected in parallel and generated therein during a generative SLS building process of the body, which branch channels extend behind a shaping surface (31) to be temperature-controlled or to a cooling/heating surface of the body, wherein the branch channels (7) open from an main inlet channel (11) into a collecting outlet channel (12), and wherein the cross-sections of the main inlet channel (11) and the collecting outlet channel (12) are considerably larger than the cross-section of the branch channels (7),
**characterized in that**
multiple branch channels (7) are, multiple times, cross-connected between their inlet/outlet mouth from the main inlet channel (11) or into the collecting outlet channel (12), and multiple branch channels (7) form a planar network of branch channels (10), which extends equidistantly to the shaping surface (31) to be cooled or the cooling/heating surface, the flow resistance in the network of branch channels (10) transversely to the main flow direction (15) is smaller than in the main flow direction (15), and wherein, in a curved or convex shaping surface, the planar structure of the branch channels (7) extends in a curved or convex manner in parallel to the correspondingly-curved or convex shaping surface (31) of the body.

2. Metallic body according to claim 1,
**characterized in that**
the branch channels (7) extend directly beneath the surface to be temperature-controlled.

3. Metallic body according to one of the preceding claims,
**characterized in that**
all branch channels (7) have substantially the same reduced cross-section.

4. Metallic body according to one of the preceding claims,
**characterized in that**
the density of the branch channels (7) arranged behind a heating/cooling or shaping surface (31) of the body is substantially constant.

5. Metallic body according to one of the preceding claims,
**characterized in that**
the network of branch channels (10) is formed by a columnar structure (21) arranged in a hollow space region of the body, wherein the columnar structure (21) separates sections of the branch channels (7) from one another.

6. Metallic body according to one of the preceding claims,
**characterized in that**
the columns of the columnar structure (21) have a round or oval cross-section.

7. Metallic body according to one of the preceding claims,
**characterized in that**
the columns of the columnar structure (21) have a rectangular, quadratic or rhombic-type cross-section.

8. Metallic body according to one of the preceding claims,
**characterized in that**
the columns of the columnar structure (21) form a hexagonal structure of the branch channels (7).

9. Metallic body according to one of the preceding claims,
**characterized in that**
a multitude of branch channels (6) are arranged substantially straight-running parallelly next to one another, wherein the spacing between the branch channels (6) is smaller than or equal to the diameter of the branch channels (6).

10. Metallic body according to one of the preceding claims,
**characterized in that**
multiple branch channels (6) run next to one another in a wave-like manner and are arranged in a planar manner engaging into one another.

11. Metallic body according to one of the preceding claims,
**characterized in that**
inside the channels (7, 11, 12), all transitions are rounded.

12. Metallic body according to one of the preceding claims,
**characterized in that**
with respect to the surface (31) to be cooled/heated, of the body (30), an insulating layer (40) of reduced mass and produced generatively during the construction process of the body (30) is arranged behind the branch channels (7).

13. Metallic body according to one of the preceding claims,
**characterized in that**
at least one purging channel opens into at least one branch channel of into the network-like structure of the branch channels (7).

14. Metallic body according to one of the preceding claims,
**characterized in that**
the branch channels (7) have a substantially elliptic cross-section.

15. Metallic body according to one of the preceding claims,
**characterized in that**
the columns of the columnar structure (21), in their center region (22), have a cross-section reduced relative to the end regions (23).

## Revendications

1. Corps métallique avec un ensemble de canaux servant à thermoréguler le moule d'injection ou de coulée formé par le corps métallique, où au moins un canal traversé par un flux de fluide est disposé dans une section de thermorégulation du corps métallique, dans lequel le canal présente entre une zone d'entrée de fluide et une zone de sortie de fluide une multitude de canaux d'embranchement (7) branchés en parallèle, générés pendant un processus de production SLS génératif du corps dans celui-ci, et à section transversale réduite, qui s'étendent derrière une face façonnée (31) à thermoréguler ou vers une face de refroidissement/de chauffage du corps, dans lequel les canaux d'embranchement (7) débouchent depuis un canal principal d'entrée (11) dans un canal de collecte de sortie (12) et dans lequel les sections transversales du canal principal d'entrée (11) et du canal de collecte de sortie (12) sont sensiblement plus grandes que la section transversale des canaux d'embranchement (7),
**caractérisé en ce que**
plusieurs canaux d'embranchement (7) sont reliés de manière transversale à plusieurs reprises entre leur embouchure de sortie/embouchure d'entrée hors du canal principal d'entrée (11) ou dans le canal de collecte de sortie (12) et plusieurs canaux d'embranchement (7) forment un réseau de canaux d'embranchement (10) plan, qui s'étend à équidistance par rapport à la face façonnée (31) à refroidir ou à la face de refroidissement/de chauffage, la résistance à l'écoulement dans le réseau de canaux d'embranchement (10) transversale par rapport au sens de circulation de flux principal (15) est inférieure à celle dans le sens circulation de flux principal (15) et dans lequel dans le cas d'une face de façonnage incurvée ou bombée, la structure plane des canaux d'embranchement (7) s'étend de manière incurvée ou bombée de manière parallèle par rapport à la face de façonnage (31), de manière correspondante incurvée ou bombée, du corps.

2. Corps métallique selon la revendication 1,
**caractérisé en ce que**
les canaux d'embranchement (7) s'étendent directement sous la surface à thermoréguler.

3. Corps métallique selon l'une quelconque des revendications précédentes,
**caractérisé en ce que**
tous les canaux d'embranchement (7) présentent sensiblement la même section transversale réduite.

4. Corps métallique selon l'une quelconque des revendications précédentes,
**caractérisé en ce que**
la densité des canaux d'embranchement (7) disposés derrière une face de chauffage/de refroidissement ou de façonnage (31) du corps est sensiblement constante.

5. Corps métallique selon l'une quelconque des revendications précédentes,
**caractérisé en ce que**
le réseau de canaux d'embranchement (10) est formé par une structure à colonnes disposée dans une zone de cavité du corps, dans lequel la structure à colonnes (21) sépare les unes des autres des sections des canaux d'embranchement (7).

6. Corps métallique selon l'une quelconque des revendications précédentes,
**caractérisé en ce que**
les colonnes de la structure à colonnes (21) présentent une section transversale ronde ou ovale.

7. Corps métallique selon l'une quelconque des revendications précédentes,
**caractérisé en ce que**
les colonnes de la structure à colonnes (21) présentent une section transversale rectangulaire, carrée ou de type losange.

8. Corps métallique selon l'une quelconque des revendications précédentes,
**caractérisé en ce que**
les colonnes de la structure à colonnes (21) forment une structure hexagonale des canaux d'embranchement (7).

9. Corps métallique selon l'une quelconque des revendications précédentes,
**caractérisé en ce que**
une multitude de canaux d'embranchement (6) sont disposés côte à côte de manière à s'étendre sensiblement de manière rectiligne et parallèle, dans lequel l'espacement entre les canaux d'embranchement (6) les uns des autres est inférieur ou égal au diamètre des canaux d'embranchement (6).

10. Corps métallique selon l'une quelconque des revendications précédentes,
**caractérisé en ce que**
plusieurs canaux d'embranchement (6) s'étendent côte à côte de manière ondulée et sont disposés à plat de manière à venir en prise les uns dans les autres.

11. Corps métallique selon l'une quelconque des revendications précédentes,
**caractérisé en ce que**
toutes les transitions sont arrondies à l'intérieur des canaux (7, 11, 12).

12. Corps métallique selon l'une quelconque des revendications précédentes,
**caractérisé en ce que**
une couche isolante (40) générée de manière générative lors du processus de construction du corps (30) avec une masse réduite est disposée par rapport à la face (31) à refroidir/chauffer du corps (30) après les canaux d'embranchement (7).

13. Corps métallique selon l'une quelconque des revendications précédentes,
**caractérisé en ce que**
au moins un canal de rinçage débouche dans au moins un canal d'embranchement ou dans la structure de type réseau des canaux d'embranchement (7).

14. Corps métallique selon l'une quelconque des revendications précédentes,
**caractérisé en ce que**
les canaux d'embranchement (7) présentent une section transversale sensiblement elliptique.

15. Corps métallique selon l'une quelconque des revendications précédentes,
**caractérisé en ce que**
les colonnes de la structure à colonnes (21) présentent dans leur zone centrale (22) un diamètre réduit par rapport aux zones d'extrémité (23).
